**Europäisches Patentamt**

**European Patent Office**

**Office européen des brevets**

(19)

(11) Veröffentlichungsnummer : **0 341 455 B1**

(12) # EUROPÄISCHE PATENTSCHRIFT

(45) Veröffentlichungstag der Patentschrift :
**24.06.92 Patentblatt 92/26**

(51) Int. Cl.⁵ : **F01D 5/28,** F01D 5/30,
C23F 15/00

(21) Anmeldenummer : **89106921.3**

(22) Anmeldetag : **18.04.89**

(54) **Folienzwischenlage zur Fügung von reibkorrosionsgefährdeten Maschinenbauteilen.**

(30) Priorität : **10.05.88 DE 3815977**

(43) Veröffentlichungstag der Anmeldung :
**15.11.89 Patentblatt 89/46**

(45) Bekanntmachung des Hinweises auf die
Patenterteilung :
**24.06.92 Patentblatt 92/26**

(84) Benannte Vertragsstaaten :
**DE FR GB IT SE**

(56) Entgegenhaltungen :
**EP-A- 0 125 718
DE-C- 834 209
DE-C- 3 133 158**

(56) Entgegenhaltungen :
**GB-A- 573 118
GB-A- 709 636
AEROSPACE AMERICA. vol. 25, no. 5, Mai
1987, NEW YORK US Seiten 16 - 18; H.E.Sliney:
˝Solid lubricants for hot engines˝**

(73) Patentinhaber : **MTU MOTOREN- UND
TURBINEN-UNION MÜNCHEN GMBH
Dachauer Strasse 665 Postfach 50 06 40
W-8000 München 50 (DE)**

(72) Erfinder : **Hoffmüller, Wilhelm
Rudhartstrasse 11
W-8000 München 50 (DE)**
Erfinder : **Eichner, Josef
Eichenstrasse 10c
W-8069 Scheyern (DE)**

EP 0 341 455 B1

## Beschreibung

Die Erfindung betrifft eine Folienzwischenlage zur Fügung von reibkorrosionsgefährdeten Maschinenbauteilen.

Derartige kompakte Folienzwischenlagen werden zwischen den reibkorrosionsgefährdeten Maschinenbauteilen positioniert. Damit wird der direkte Kontakt der Oberflächen der schwingungs- und vibrationsbelasteten Bauteile vermieden. Das Foliengrundmaterial der kompakten Folienzwischenlage ist neben wechselnden Druckbelastungen beim reibkorrosiven Angriff erhöhten Scherkräften ausgesetzt, so daß die kompakte Folienzwischenlage nur geringe Standzeiten aufgrund von Reibkorrosion und Mikrorißbildung aufweist und deshalb häufig auszuwechseln ist.

Eine weitere Methode zum Schutz von reibkorrosionsgefährdeten Bauteilen ist es, die Folie durch eine Zwischenschicht nach DE-PS 31 33 158 zu ersetzen. Diese Zwischenschicht wird in die Fuge zwischen den Maschinenbauteilen nach dem aus DE-PS 31 33 158 bekannten Verfahren eingebracht und haftet an den reibkorrosionsgefährdeten Oberflächen der zu schützenden Bauteile. Sie bildet eine mechanische Einheit mit den beiden Bauteiloberflächen und die Bauteile sind nachteilig nicht ohne Zerstörung der Zwischenschicht demontierbar. Darüber hinaus setzen sich nachteilig Mikrorisse, die durch hohe Scherkräfte in der Zwischenschicht bei Vibrationsbelastungen entstehen, ungehindert bis in der Werkstoff der Maschinenbauteile fort, was nachhaltig die Lebensdauer der zu fügenden Maschinenbauteile verringert.

Eine Weiterentwicklung dieser Schutzschicht ist aus DE-PS 32 36 376 bekannt, in der eine seperate Beschichtung der Oberflächen der zu fügenden Bauteile beispielsweise mit Kupfer, Silber oder Aluminium offenbart wird. Ein Nachteil dieser an den Oberflächen der zu fügenden Bauteile festhaftenden Schichten ist, daß die Schädigungen in Form von Mikrorissen durch Reibkorrosion, die in den Schutzschichten entstehen, ungehindert bis in die zu fügenden Bauteile hinein ausbreiten.

Aufgabe der Erfindung ist es, eine gattungsgemäße Folienzwischenlage mit entsprechender Oberflächenpräparation anzugeben, die für Betriebstemperaturen über 400°C geeignet ist und bei betriebsbedingten Pressungen bis $20 \cdot 10^5 N/m^2$ keine plastischen Verformungen aufweist, sowie kerbschlagunempfindlich und warmfest ist. Sie soll die Gefahr von Reibkorrosion und Mikrorißbildung bei Schwingungs- und Vibrationsbelastung der zu fügenden Bauteile vermindern und die Lebensdauer der Bauteile erhöhen.

Die Aufgabe wird erfindungsgemäß dadurch gelöst, daß die Folienzwischenlage mindestens zwei aufeinanderliegende Folien umfaßt, deren gegenseitige Berührungsflächen einen geringeren Reibbeiwert haben und verschleißfester sind, als deren Außenflächen.

Damit wird erreicht, daß die Außenflächen der Folien mit dem größeren Reibbeiwert rutschfest an den zu fügenden Maschinenbauteilen anliegen und mikroskopische Relativbewegungen aufgrund von schwingenden und vibrierenden Belastungen der Fuge zwischen Bauteiloberflächen und Folienaußenflächen behindern. Diese mikroskopischen Relativbewegungen wirken sich vielmehr zwischen den Berührungsflächen der Folien aus. Da diese erfindungsgemäß einen geringeren Reibbeiwert als die Außenflächen haben, wird die Reibkorrosion vermindert und Scherkräfte die den Folienwerkstoff schädigen könnten abgebaut. Durch die höhere Verschleißfestigkeit der Berührungsflächen wird eine höhere Lebensdauer für die Folienzwischenlage aus zwei aufeinanderliegenden Folien erreicht, als mit den bisher bekannten Lösungen.

Durch die erfindungsgemäße Lösung wird der reibkorrosive Angriff von den zu fügenden Bauteiloberflächen auf die Berührungsflächen von auswechselbaren Folien verlegt. Die Vorteile gegenüber der Fügung durch festhaftende Zwischenschichten nach DE-PS 31 33 158 liegen einmal darin, daß sich Mikrorisse, die von der Zwischenlage ausgehen nicht ungehindert in die zu fügenden Bauteile fortsetzen können, und zum anderen in der leichten Auswechselbarkeit der Zwischenschicht, da schadhafte Folien in entsprechenden Wartungsintervallen ersetzt werden können. Unbeschädigte Folien sind darüberhinaus wiederverwendbar.

Gegenüber einer Fügung von beidseitig beschichteten Bauteiloberflächen z.B. nach DE-PS 32 36 376 ergibt sich aus der erfindungsgemäßen Lehre der Vorteil, daß sich Mikrorisse aufgrund von Reibkorrosion nur noch bis zu den Außenflächen der Folienzwischenlage ausbreiten und das Bauteil verschont bleibt.

Gegenüber kompakten Folienzwischenlagen hat die erfindungsgemäße Folienzwischenlage den Vorteil, daß sie Scherkräfte, die von tangentialen Relativbewegungen zwischen den Bauteilen bei schwingender und vibrierender Belastung verursacht werden, in der Berührungsebene der beiden Folien abbaut und dadurch die Lebensdauer und die Wirtschaftlichkeit der Folienzwischenlage erhöht.

Die Dicke der Folienzwischenlage muß einerseits ausreichen, um Spitzenbelastungen auszugleichen und andererseits dünn genug sein, um Lasten ohne plastisches Kriechen der Folie zwischen den zu fügenden Bauteilen zu übertragen. Diese Forderung wird von Folienzwischenlagen mit Folien in einem Dickenbereich von 0,01 bis 0,5 mm erfüllt. Einen wesentlichen Einfluß auf die Foliendicke haben die Werkstoffeigenschaften des Folienwerkstoffes.

Bei hochwertigen Folienwerkstoffen wie Edelstahl-,Nickelbasisoder Kobaltbasislegierungen haben sich

2

EP 0 341 455 B1

Foliendicken im Bereich von 0,03 bis 0,07 mm als besonders vorteilhaft erwiesen.

Vorteilhaft ist es, die Folien aus einem gleichartigen Werkstoff wie die zu fügenden Bauteile herzustellen, um unerwünschte Materialwanderungen durch Elementbildung zu vermeiden. Gleichzeitig werden die Außenflächen und die Berührungsflächen unterschiedlich bearbeitet.

Zur Erhöhung des Reibbeiwertes werden die Außenflächen vorteilhaft mit scharfkantigen Partikeln oberflächengestrahlt wie z.B. sandgestrahlt. Zur Vergrößerung des Reibbeiwertes und gleichzeitiger Verfestigung der Oberfläche werden die Außenflächen der Folien vorteilhaft mit kugelförmigen Partikeln oberflächengestrahlt. Die Beruhrungs flächen werden demgegenüber geglättet und z.B. auf Hochglanz poliert, um den Reibbeiwert vorteilhaft herabzusetzen.

Erweist sich der Werkstoff des Bauteils als ungeeigneter Grundwerkstoff für die Folienzwischenlage, so werden vorteilhaft Edelstähle insbesondere Chrom-Nickel-Molybdän-Stähle wie beispielsweise X12 Cr Ni Mo 12 oder 0,1 C-12 Cr-2,5 Ni-1,8 Mo oder auch Chrom-Nickel-Titan-Stähle wie beispielsweise 0,1 C-18 Cr-9Ni-0,4 Ti eingesetzt. Diese Folienwerkstoffe sind entsprechend der Aufgabenstellung warmfest und kerbschlagunempfindlich.

Nickelbasiswerkstoffe wie 0,1C-22 Cr-18 Fe-9 Mo
(Handelsname: Hastelloy) oder 0,06 C-20 Cr-6 Mo-2 Ti-0,5 Al
(Handelsname: C) oder 0,1 C-20 Cr-18 Co-2,5 Ti-1,5 Al
(Handelsname: Nimonic 90) haben den Vorteil, daß sie als harte und hochfeste Werkstoffe über die in der Aufgabenstellung genannten Grenzen für Temperatur- und Druckfestigkeit hinaus einsetzbar sind.

Kobaltbasiswerkstoffe wie 0,1 C-20 Cr-15 W-10 Ni (Handelsnahme: Haynes Alloy 25) haben den Vorteil, daß sie noch bei hohen Temperaturen besonders kerbschlagunempfindlich sind und sich als Grundwerkstoff für die Folienzwischenlage bewährt haben.

Eine besondere Ausgestaltung der Erfindung bilden Folien aus den o.a. Grundwerkstoffen mit amorpher Struktur. Diese Glasmetallfolien wie beispielsweise Eisen-Nickel-Bor-Legierungen zeigen Bearbeitungsvorteile gegenüber Folien mit kristalliner Struktur.

Durch einen duktilen Belag wie beispielsweise einer Nickelbasisschicht von 0,1 bis 3 μm Dicke auf den Außenflächen der Folienzwischenlage werden diese in Mikrobereichen form schlüssig mit zu fügenden rauhen Bauteiloberflächen verbunden. Gleichzeitig werden dadurch in Mikrobereichen Spannungsspitzen durch plastische Verformung der beispielhaften Nickelbasisschicht abgebaut und formschlüssige rutschfeste Abdrücke der rauhen Bauteiloberflächen in den duktilen Belägen gebildet.

Bei glatten Bauteiloberflächen ist es von Vorteil die Außenflächen der Folienzwischenlage mit reibbeiwerterhöhenden keramischen Pulvern wie Borkarbid, Wolframkarbid oder Siliciumkarbid zu belegen. Dieser körnige Belag der beispielsweise in eine Nickelbasisschicht eingebettet sein kann bewirkt, daß sich die Folienaußenflächen gegenüber glatten Bauteiloberflächen nicht verschieben.

Erfindungsgemäß ist eine Mikroverschiebbarkeit zwischen den Berührungsflächen der Folien vorgesehen. Dieses wird vorteilhaft dadurch erreicht, daß mindestens eine der beiden gegenseitigen Berührungsflächen mit einer glatten und weichen Gleitschicht aus Silber oder Kupfer oder Hochtemperaturlack oder einem molybdän- oder graphithaltigen Mittel beschichtet ist.

Fur hochbelastete Fügungen von Bauteilen wird vorteilhaft mindestens eine der beiden Berührungsflächen mit einer glatten verschleißfesten Gleitschicht aus Kobalt und Chromoxid beschichtet.

Eine vorteilhafte Weiterbildung des Erfindungsgedankens ist eine Kombischicht auf den Berührungsflächen. Diese Kombischicht besteht aus einer glatten verschleißfesten Schicht und einer weichen Gleitschicht. Dazu wird zunächst die härtere verschleißfeste und danach die weichere Gleitschicht aufgebracht. Die Kombischicht läßt einerseits ein ideales Gleiten zu und ist gleichzeitig gegen Verschleiß geschützt.

Bei extremer Reibkorrosionsgefährdung wird auf die weiche Gleitschicht verzichtet und mindestens eine der beiden Berührungsflächen wird vorteilhaft mit einer ideal glatten, harten, verschleißfesten Gleitschicht aus Titannitrid, Wolframkarbid oder Zirkonsilicat belegt.

Zur Aufbringung derartiger Gleitschichten hat sich besonders das Plasmaspritzverfahren bewährt. Plasmaspritzschichten aus den o.a. Werkstoffkombinationen zeichnen sich durch hohe Haftfestigkeit auf dem Foliengrundwerkstoff und durch ihre Oberflächengüte aus, wodurch ein verlustarmes Gleiten der Berührungsflächen erreicht wird.

Anhand der folgenden Prinzipzeichnungen wird die Erfindung durch Ausführungsbeispiele näher erläutert, wobei

Fig. 1 eine Folienzwischenlage für den Schaufelfuß einer Verdichterschaufel,

Fig. 2 eine Einzelheit A der Fig. 1,

Fig. 3 eine Folienzwischenlage für Kolbenringe der Ausgleichswelle eines Strahltriebwerks,

Fig. 4 eine Folienzwischenlage für das Einspannende eines Torsionsstabes,

Fig. 5 eine Folienzwischenlage für den Zentrierungswulst einer Dehnschraube,

Fig. 6 eine Folienzwischenlage für eine Vielkeilwelle und

Fig. 7 eine Folienzwischenlage für eine Flanschverbindung zeigt.

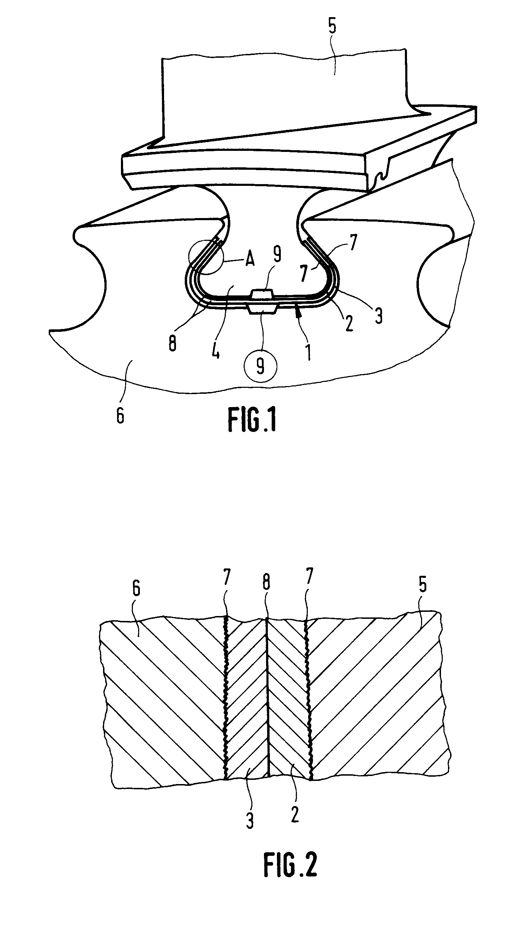

Fig. 1 zeigt eine Folienzwischenlage 1 aus zwei Folien 2 und 3 zur Fügung eines Schaufelfußes 4 einer Verdichterschaufel 5 mit einer Rotorscheibe 6 einer Verdichterstufe. Dazu wurden die Folien 2 und 3 von 0,03 mm Dicke aus Edelstahl (0,1C-12Cr-2,5Ni-1,8Mo) auf ihren Außenflächen 7 sandgestrahlt und ihre Berührungsflächen 8 hochglanzpoliert. Anschließend wurden sie als Folienzwischenlage 1 dem Schaufelfuß 4 angepaßt, so daß die Folie 2 mit ihrer sandgestrahltenAußenfläche am Schaufelfuß 4 die Folie 3 in der Nut der Rotorscheibe 6 der Verdichterstufe anliegt. Die Aufbördelungen 9 der Folien 2 und 3 sichern diese vor einseitigem axialen Verrutschen. Aufgrund der hochglanzpolierten Berührungsflächen 8 wirken axiale Komponenten von Vibrationen und shwingenden Belastungen nicht als Scherkräfte, so daß Mikrorisse im Folienwerkstoff und Reibkorrosion der Fügeflächen von Schaufelfuß 4 und Rotorscheibe 6 vermieden werden.

Fig. 2 zeigt eine Einzelheit A der Fig. 1, wobei die rutschfeste Fügung der Folienaußenflächen 7 mit den zu fügenden Bauteilen wie beispielsweise einer Rotorscheibe 6 mit einer Verdichterschaufel 5 und die hochglanzpolierten gleitenden Berührungsflächen 8 zu sehen sind.

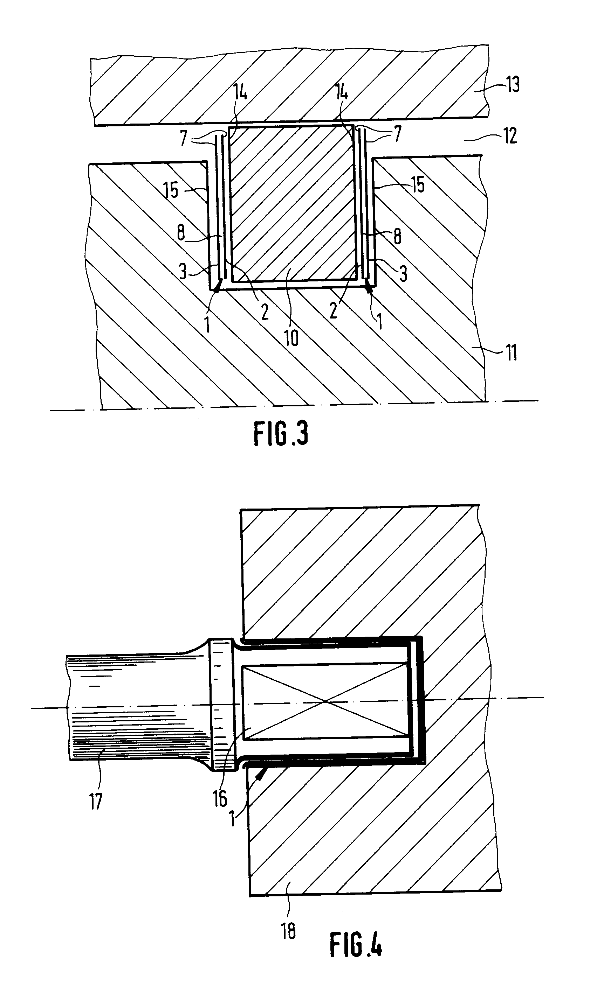

Fig. 3 zeigt scheibenförmig ausgebildete Folienzwischenlagen 1, die beidseitig eines Kolbenringes 10 einer Ausgleichswelle 11 positioniert sind. Der Kolbenring 10 dichtet einen zylindrischen Spalt 12 zwischen einer Hohlwelle 13 und der Ausgleichswelle 11 ab. Durch die Folienzwischenlage 1 aus mindestens zwei Folien 2 und 3 werden die scheibenförmigen Seitenflächen 14 des Kolbenringes 10 und die scheibenförmigen Nutflanken 15 in der Ausgleichswelle 11 vor Reibkorrosion geschützt. Dazu wird in diesem Fall als Folien grundwerkstoff ein 0,07 mm dicker Nickelbasiswerkstoff (0,1C-22Cr-18Fe-9Mo) eingesetzt, der auf den Folienaußenflächen 7 mit einer 3 μm dicken Nickelbasisschicht belegt ist, in die zur Erhöhung des Reibbeiwertes Siliciumkarbid Partikel von 0,2 bis 4 μm Korngröße eingebettet sind. Die Berührungsflächen 8 der Folien 2 und 3 wurden mit einer 0,3 μm dicken Kombischicht als Gleitschicht aus verschleißfestem Kobalt/Chromoxid und weichem Molybdänsulfit beschichtet.

Fig. 4 zeigt eine topfförmig ausgebildete Folienzwischenlage 1 als Reibkorrosionsschutz für das Einspannende 16 eines Torsionsstabes 17 in einem Einspannblock 18, wobei ein Kobaltbasisfolienwerkstoff (0,1C-20Cr-15W-10Ni) mit oxidgestrahlten Außenflächen und silberbeschichteten Berührungsflächen eingesetzt wird.

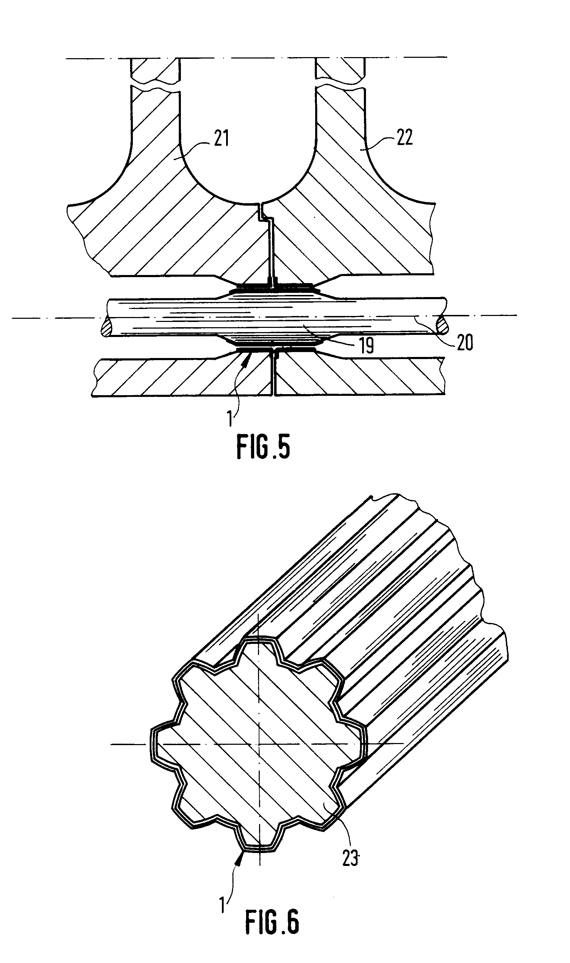

Fig. 5 zeigt eine zylindrisch ausgebildete Folienzwischenlage 1 zur Fügung eines Zentrierungswulstes 19 einer Dehnschraube 20 mit Zentrierbohrungen von Verdichterscheiben 21 und 22, wobei die Berührungsflächen der Folien aus Edelstsahl hochglanzpoliert und mit einem Hochtemperaturlack beschichtet, sowie die zylindrischen Außenflächen kugelgestrahlt sind.

Fig. 6 zeigt eine Folienzwischenlage 1 auf einer Vielkeilwelle 23. Als Foliengrundwerkstoff dient in diesem Fall eine 0,3 mm dicke Nickelbasislegierung, die auf den Außenflächen eine 0,5 μm dicke kugelgestrahlte, duktile Nickelbasisschicht und auf den Folienberührungsflächen eine weiche Gleitschicht aus 0,1 μm Kupfer trägt.

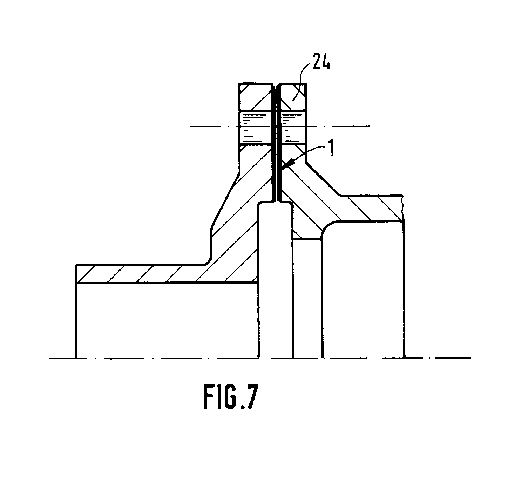

Fig. 7 zeigt eine Folienzwischenlage 1 für eine vibrationsbelastete Flanschverbindung 24. Die Folienzwischenlage 1 besteht aus Glasmetallfolien einer Eisen-Nickel-Bor-Legierung, deren Berührungsflächen hochglanzpoliert und mit einer Plasmaspritzschicht aus Nickel, Aluminium und Zirkonoxid als Gleitschicht belegt wurden. Die Folienaußenflächen sind mit einer 2 μm dicken Nickelschicht beschichtet, in die zur Erhöhung des Reibbeiwertes Wolframkarbidpartikel von 0,1 bis 2,5 μm Korngröße eingebettet wurden.

## Patentansprüche

1. Folienzwischenlage zur Fügung von reibkorrosionsgefährdeten Maschinenbauteilen, dadurch gekennzeichnet, daß sie mindestens zwei aufeinanderliegende Folien (2) und (3) umfaßt, deren gegenseitige Berührungsflächen (8) einen geringeren Reibbeiwert haben und verschleißfester sind als deren Außenflächen (7).

2. Folienzwischenlage nach Anspruch 1, dadurch gekennzeichnet, daß die Dicke der Folien (2) und (3) im Bereich von 0,01 bis 0,05 mm vorzugsweise im Bereich von 0,03 bis 0,07 mm liegt.

3. Folienzwischenlage nach den Ansprüchen 1 oder 2, dadurch gekennzeichnet, daß der Grundwerkstoff der Folien (2) und (3) ein Edelstahl ist.

4. Folienzwischenlage nach den Ansprüchen 1 oder 2, dadurch gekennzeichnet, daß der Grundwerkstoff der Folien (2) und (3) eine Nickelbasis- oder Kobaltbasislegierung ist.

5. Folienzwischenlage nach einem oder mehreren der Ansprüche 1 bis 4, dadurch gekennzeichnet, daß der Grundwerkstoff der Folien (2) und (3) eine amorphe Struktur hat.

6. Folienzwischenlage nach einem oder mehreren der Ansprüche 1 bis 5, dadurch gekennzeichnet, daß die Außenflächen (7) der Folien (2) und (3) oberflächengestrahlt sind.

7. Folienzwischenlage nach einem oder mehreren der Ansprüche 1 bis 6, dadurch gekennzeichnet, daß die Außenflächen (7) der Folien (2) und (3) mit einem duktilen Belag z.B. Nickelbasis beschichtet sind.

8. Folienzwischenlage nach einem oder mehreren der Ansprüche 1 bis 7, dadurch gekennzeichnet, daß die Außenflächen (7) der Folien (2) und (3) mit reibbeiwerterhöhenden keramischen Pulvern wie Borcarbid, Wolframcarbid oder Siliciumcarbid körnig belegt sind.

9. Folienzwischenlage nach einem oder mehreren der Ansprüche 1 bis 8, dadurch gekennzeichnet, daß mindestens eine der beiden gegenseitigen Berührungsflächen (8) mit einer glatten weichen Gleitschicht aus Silber oder Hochtemperaturlack oder einem molybdän- oder graphithaltigen Mittel beschichtet ist.

10. Folienzwischenlage nach einem oder mehreren der Ansprüche 1 bis 9, dadurch gekennzeichnet, daß mindestens eine der gegenseitigen Berührungsflächen (8) der Folien (2) oder (3) mit einer glatten verschleißfesten Gleitschicht aus Kobalt und Chromoxid beschichtet ist.

11. Folienzwischenlage nach einem oder mehreren der Ansprüche 1 bis 9, dadurch gekennzeichnet, daß mindestens eine der gegenseitigen Berührungsflächen (8) der Folien (2) oder (3) mit einer glatten, verschleißfesten Gleitschicht aus Titannitrid oder Wolframkarbid oder Zirkonsilicat belegt ist.

12. Folienzwischenlage nach einem oder mehreren der Ansprüche 10 bis 11, dadurch gekennzeichnet, daß die glatten verschleißfesten Gleitschichten auf den gegenseitigen Berührungsflächen der Folien Plasmaspritzschichten sind.


## Revendications

1. Couche intermédiaire en feuilles pour le montage d'éléments sensibles à la corrosion par friction, caractérisée en ce qu'elle comprend au moins deux feuilles situées l'une contre l'autre (2) et (3), dont les surfaces de contact mutuelles (8) ont un coefficient de frottement plus faible et sont plus résistantes à l'usure que leurs surfaces extérieures (7).

2. Couche intermédiaire en feuilles selon la revendication 1, caractérisée en ce que l'épaisseur des feuilles (2) et (3) se situe dans la zone de 0,01 à 0,05 mm, de préférence dans la zone de 0,03 à 0,07 mm.

3. Couche intermédiaire en feuilles selon les revendications 1 ou 2, caractérisée en ce que le matériau de base des feuilles (2) et (3) est un acier spécial.

4. Couche intermédiaire en feuilles selon les revendications 1 ou 2, caractérisée en ce que le matériau de base des feuilles (2) et (3) est un alliage à base de nickel ou à base de cobalt.

5. Couche intermédiaire en feuilles selon une ou plusieurs des revendications 1 à 4, caractérisée en ce que le matériau de base des feuilles (2) et (3) a une structure amorphe.

6. Couche intermédiaire en feuilles selon une ou plusieurs des revendications 1 à 5, caractérisée en ce que les surfaces extérieures (7) des feuilles (2) et (3) sont sablées en surface.

7. Couche intermédiaire en feuilles selon une ou plusieurs des revendications 1 à 6, caractérisée en ce que les surfaces extérieures (7) des feuilles (2) et (3) sont recouvertes d'une couche ductile par exemple à base de nickel.

8. Couche intermédiaire en feuille selon une ou plusieurs des revendications 1 à 7, caractérisée en ce que les surfaces extérieures des feuilles (2) et (3) sont recouvertes de poudres de céramique augmentant le coefficient de frottement comme du carbure de bore, du carbure de tungstène ou du carbure de silicium en grains.

9. Couche intermédiaire en feuilles selon une ou plusieurs des revendications 1 à 8, caractérisée en ce qu'au moins une des deux surfaces mutuelles (8) est recouverte d'une couche glissante lisse et tendre en argent ou en laque pour haute température ou en un agent contenant du molybdène ou du graphite.

10. Couche intermédiaire en feuilles selon une ou plusieurs des revendications 1 à 9, caractérisée en ce qu'au moins une des surfaces de contact mutuelles (8) des feuilles (2) ou (3) est recouverte d'une couche glissante lisse résistante à l'usure en cobalt et oxyde de chrome.

11. Couche intermédiaire en feuilles selon une ou plusieurs des revendications 1 à 9, caractérisée en ce qu'au moins une des surfaces de contact mutuelles (8) des feuilles (2) ou (3) est recouverte d'une couche glissante lisse résistante à l'usure en carbure de tungstène ou silicate de zirconium.

12. Couche intermédiaire en feuilles selon une ou plusieurs des revendications 10 à 11, caractérisée en ce que les couches glissantes lisses et résistantes à l'usure sont des couches projetées au plasma sur les surfaces de contact mutuelles des feuilles.


## Claims

1. Intermediate foil layer for joining machine components which are at risk of fretting corrosion, characterised in that they comprise at least two superimposed foils (2) and (3) of which the mutual contacting surfaces (8) have a low coefficient of friction and are more resistant to wear than their outer surfaces (7).

2. Intermediate foil layer according to Claim 1, characterised in that the thickness of the foils (2) and (3) is in the range from 0.01 to 0.05 mm and preferably in the range from 0.03 to 0.07 mm.

3. Intermediate foil layer according to Claim 1 or 2, characterised in that the base material of the foils (2) and (3) is a high grade steel.

4. Intermediate foil layer according to Claim 1 or 2, characterised in that the base material of the foils (2) and (3) is a nickel-based or cobalt-based alloy.

5. Intermediate foil layer according to one or more of Claims 1 to 4, characterised in that the base material of the foils (2) and (3) has an amorphous structure.

6. Intermediate foil layer according to one or more of Claims 1 to 5, characterised in that the outer surfaces (7) of the foils (2) and (3) are surface-blasted.

7. Intermediate foil layer according to one or more of Claims 1 to 6, characterised in that the outer surfaces (7) of the foils (2) and (3) are coated with a ductile coating based on nickel for example.

8. Intermediate foil layer according to one or more of Claims 1 to 7, characterised in that the outer surfaces (7) of the foils (2) and (3) are coated in a granular manner with ceramic powders such as boron carbide, tungsten carbide or silicon carbide, which increase the coefficient of friction.

9. Intermediate foil layer according to one or more of Claims 1 to 8, characterised in that at least one of the two mutual contact surface (8) is coated with a smooth soft sliding layer of silver or high temperature varnish or a composition containing molybdenum or graphite.

10. Intermediate foil layer according to one or more of Claims 1 to 9, characterised in that at least one of the mutual contact surfaces (8) of the foils (2) or (3) is coated with a smooth, wear-resistant sliding layer of cobalt and chromium oxide.

11. Intermediate foil layer according to one or more of Claims 1 to 9, characterised in that at least one of the mutual contact surfaces (8) of the foils (2) and (3) is coated with a smooth, wear-resistant sliding layer of titanium nitride or tungsten carbide or zirconium silicate.

12. Intermediate foil layer according to one or both of Claims 10 and 11, characterised in that the smooth, wear-resistant sliding layers on the mutual contacts surfaces of the foils are plasma-sprayed layers.

FIG.1

FIG.2

FIG.3

FIG.4

FIG.5

FIG.6

FIG.7